Europäisches Patentamt

European Patent Office

Office européen des brevets

(11) Publication number: **0 089 954**
**B1**

# (12) EUROPEAN PATENT SPECIFICATION

(45) Date of publication of patent specification: **02.12.87**

(51) Int. Cl.⁴: **B 64 C 3/18,** B 32 B 5/00

(21) Application number: **82900056.1**

(22) Date of filing: **30.09.81**

(86) International application number:
**PCT/US81/01319**

(87) International publication number:
**WO 83/01238 14.04.83 Gazette 83/09**

(54) **COMPOSITE STRUCTURAL SKIN SPAR JOINT AND METHOD OF MAKING.**

(43) Date of publication of application:
**05.10.83 Bulletin 83/40**

(45) Publication of the grant of the patent:
**02.12.87 Bulletin 87/49**

(84) Designated Contracting States:
**DE FR GB NL SE**

(56) References cited:
**FR-A-2 050 498**
**US-A-3 771 748**
**US-A-3 950 115**
**US-A-4 151 031**
**US-A-4 253 898**
**US-A-4 284 443**

(73) Proprietor: **THE BOEING COMPANY**
**P.O. Box 3707 Mail Stop 7E-25**
**Seattle Washington 98124-2207 (US)**

(72) Inventor: **WHITENER, Philip Charles**
**2624 Southwest 167th Place**
**Seattle, WA 98166 (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

Courier Press, Leamington Spa, England.

## Description

The invention relates to a joint as described in the preamble of claim 1 and to a method of producing the same.

Such a joint is known from FR—A—2 050 498. The high strength to weight ratio of composite components makes the composites attractive for use on airplanes. However, the joints between composite components involve one of the most difficult problems of adapting the composites to the manufacture of airplanes. These problems are severely multiplied when the joints are highly stressed in several directions.

The joint known from FR—A—2 050 498 has as disadvantage that the reinforcing core in the body forms no integrated structure with the reinforcing core extending in the arms. The core in the body is bounded by a reinforcing plate that is not a part of the core extending in the arms. It is the object of the invention to provide an integrated skin-spar joint having an improved strength.

This is according to the invention achieved by the features as described in claim 1. It was found that a composite skin-spar joint could be prepared that not only lends itself to providing a low weight high strength joint for any composite, but it is particularly attractive for use in aircraft wings. The joint when integrated makes spars that carry the loads without the need for ribs. This is achieved, according to a further aspect of the invention, by the features of claim 10. Claims 14 to 16 concern a method of making a composite skin-spar joint as claimed in any of the claims 1 to 13.

Description of the Drawings

Figure 1 shows a fragmented exploded perspective view of the composite skin-spar joint.

Figure 2 shows a fragmented perspective view of the skin-spar joint being formed.

Figure 3 shows a fragmented perspective view of the composite skin-spar joint of Figure 1 joined to parts of a wing.

Figure 4 shows a cross-sectional side elevational view of skin-spar joint joined in a wing of an airplane.

Figure 5 shows a schematic plan view of a wing of an airplane using the composite skin-spar joint.

Figure 6 is a graph showing the wing bending moment for the wing of Figure 5.

Figure 7 shows a side elevational view of one of the chords, without a cover, making up the composite skin-spar joint.

Figure 8 is a cross-sectional view taken along line 8—8 of Figure 7.

Detailed Description

Composite skin-spar joint 10, is made up of resin impregnated interwoven fabric 12, cores 14, and 16, and chords 18a and 18b.

The interwoven fabric 12 is prepared from any of the known reinforcing fibers such as, but not limited to, fiberglass and graphite, and will be impregnated with any of the known resins, such as but not limited to, phenolic or epoxy resin. The impregnated fabric extends for the length of the desired span for the joint, is essentially H-shaped in cross section, and has fiber orientation that is predominantly transverse. The fabric has a panel 20 that extends laterally and is bisected at 22a and 22b where it is interwoven with a pair of spaced apart panels 24a and 24b. The two spaced apart panels preferably have the spacing increase as the panels extend outward.

Core 14 is directly in contact with all three layers of the fabric, is located in the web area 26, and is preferably of a honeycomb material. A plastic potting compound 27 is preferably used between the core and panel 20.

On the opposite side panel 20 and in contact with all the panels is an intermediate core 16; which is a fabricated core. It has a center 28 of honeycomb; which is aligned in a crisscrossing pattern to resist shear due to lateral bending, and a reinforced plastic top layer 30a and a bottom layer 30b. A covering 32 of a resin impregnated wound fiber may be used.

Chords 18a and 18b are located to the right and left of the intermediate core 16, and are fabricated chords. Those chords respectively have top layer 34a and 34b and bottom layer 36a and 36b; which are each made from reinforced plastics and are precured before assembly. There is honeycomb 38a and 38b between the layers and the cores have a wrapping 40a and 40b of resin impregnated reinforcing fibers. Various materials can be used to prepare the cores and the chords, however, the preferred material for the honeycomb is a glass fiber treated with a heat resistant phenolic resin, and the preferred reinforcement is graphite and the preferred resin is an epoxy. These chords are prepared in a manner to vary the load bearing capacity along the length of the span. Figures 7 and 8 show a build up of core 18a. First, the bottom layer 36a is laid up using epoxy resin impregnated graphite fibers that are oriented in a zero direction or, in other words, in a spanwise direction. The thickness of the layer is varied to be the thickest at the point of greatest load 40. Next, honeycomb 38 is placed on the bottom layer and secured there by setting up the resin in the layer. When thus joined the honeycomb extends along the phantom line 42.

The honeycomb is then machined to shape. Next, a matching shaped top reinforced layer 34a is placed on top of the machined honeycomb, and the resin impregnated reinforcing fibers 40a are wrapped around it to make up the chords having constant outside dimensions, but varying load bearing properties in the spanwise direction. It is necessary to redistribute the spar chords into the skin. This is accomplished by bond between the spar chord and the skin. As the load is transferred the number of fibers in the chords are reduced until all the load is distributed into the skin.

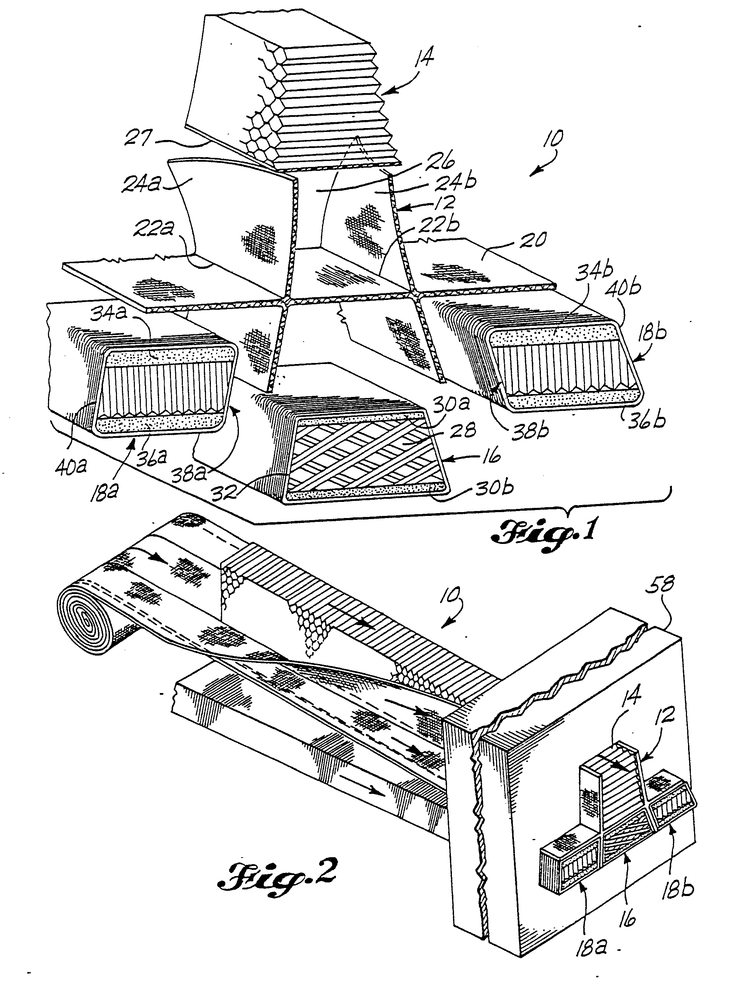

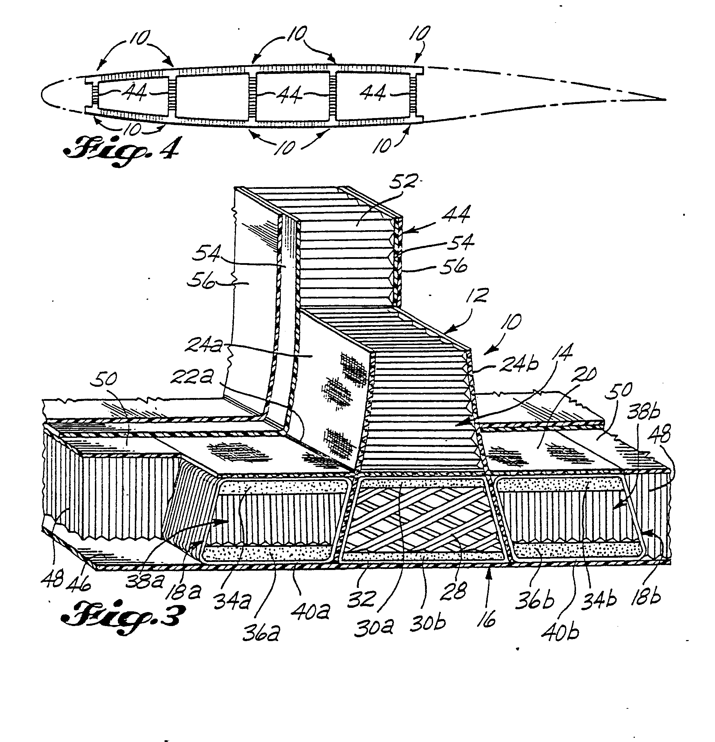

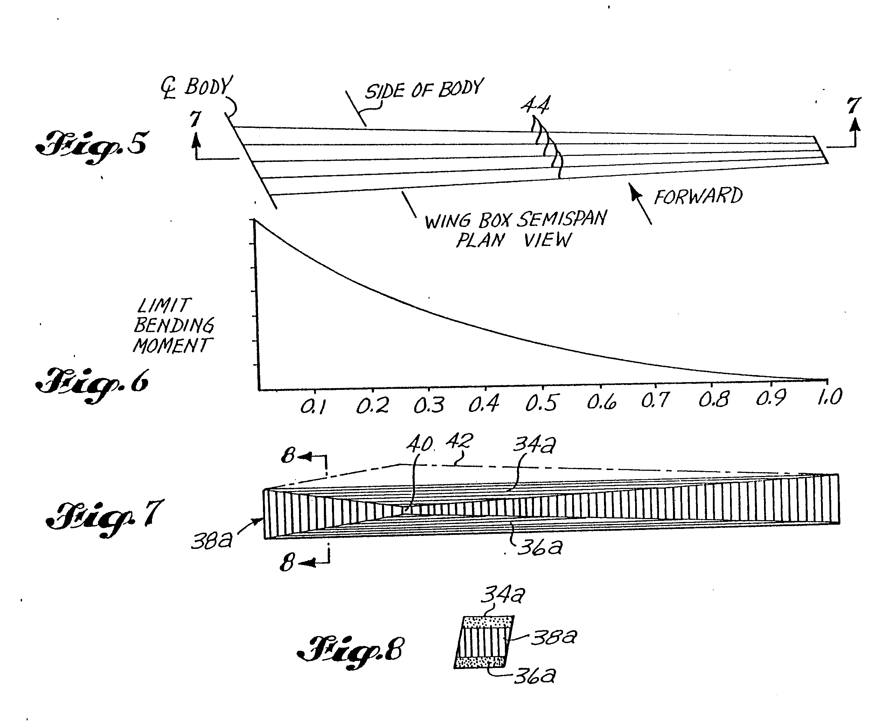

Figure 4 shows the skin-spar joint for use in an airplane wing. In that figure joints 10 are used top and bottom to make up spars 44. Figure 5 shows a schematic plan view of the same wing with the five spars 44 extending to the centerline of the body of the airplane, and Figure 6 shows a graph of the bending moment for the wing of Figure 5. Figure 3 shows the skin-spar joint 10 in a typical join with a face skin 46, adjoining honeycomb 48, reinforcing cover 50, spar web 52 of honeycomb, reinforced cover sheet 54 and fuel resistant lining 56.

Reinforcing cover sheets 54 have loads normal to the wing chord plane or to the axis of the spar chord. These loads are transferred from these cover sheets into the fabric panels 24a and 24b.

Figure 2 shows the interwoven fabric 12 and the cores 14 and 16 and chords 18a and 18b being combined into the skin-spar joint 10. The cores, chords, and fabric are placed in proper relation to each other, and guided into the curing section 58 of a microwave generator, not shown. As the joint is being pulled through the ceramic dies in the curing section of the generator the resins in the assembly are cured to form the composite skin-spar joint.

**Claims**

1. A composite skin-spar joint (10) comprising an elongated essentially T-shaped cross section having a body and arms, a resin impregnated woven fabric panel (20) to extend straight across the underside of the arms, a reinforcing core (14) in the body area, and a reinforcing core extending in the arms, characterized by a pair of resin impregnated woven fabric panels (24a, 24b) along the · outside of the body that extend through the arms, and in that said reinforcing core extending in the arms consists of two individual chords (18a, 18b) and an intermediate core (16) separated from each other by said pair of fabric panels (24a, 24b).

2. A composite skin-spar joint as in claim 1 characterized in that the pair of resin impregnated fabric panels (24a, 24b) has a spacing that varies to move farther apart as the panels extend outward.

3. A composite skin-spar joint as in claim 2, characterized in that the pair of reinforcing chords (18a, 18b) in the arms has varying load bearing properties in a spanwise direction.

4. A composite skin-spar joint as in claim 2, wherein the pair of reinforcing chords (18a, 18b) in the arms each comprise: a top (34a, 34b) and bottom (36a, 36b) face sheet of reinforced plastic, a nonmetallic honeycomb (38a, 38b) between the face sheets, and a resin impregnated fiber wrapping (40a, 40b) to make up each of the pair of chords.

5. A composite skin-spar joint as in claim 4 further comprising: the face sheet (34a; 34b, 36a; 36b) reinforcement of fibers oriented in a spanwise direction, and the thickness of face sheets and honeycomb (38a; 38b) varying within the chord (18a; 18b) with the face sheets increasing in thickness and the honeycomb (38a; 38b) having a corresponding decrease in the thickness along the span as the load increases.

6. A composite skin-spar joint as in claim 5 wherein the face reinforcement and the fiber for the wrapping are of graphite and the honeycomb (38a, 38b) is of glass fabric in an epoxy resin.

7. A composite skin-spar joint as in claim 3, further comprising the intermediate second core (16) having crisscrossing reinforcing to resist torsional loads.

8. A composite skin-spar joint as in claim 3 wherein the intermediate core (16) comprises: a top (30a) and bottom (30b) face sheet of reinforced plastic, a nonmetallic crisscrossing honeycomb (28) between the face sheets and a resin impregnated fiber wrapping (32) to make up the intermediate core.

9. A composite skin-spar joint as in claim 8 wherein the face sheet (30a, 30b) reinforcement and the wrapping (32) are of graphite fibers and the honeycomb (28) is glass fibers in an epoxy resin.

10. A composite wing skin-spar joint (10) comprising: a resin impregnated woven fabric having two spaced apart panels (24a, 24b) to extend the length of wingspan and an intersecting panel (20) that extends between, becomes interwoven with, and extends laterally beyond each of the spaced apart panels (24a, 24b); a honeycomb core (14) to extend between the two panels and adjacent the side of the intersecting panel facing inwards of the joint; a formed core (16) between the two panels (24a, 24b) and adjacent the opposite side of the intersecting panel (20) with the formed core (16) having a center of honeycomb (28) aligned in a crisscrossing direction, a reinforced resin layer (30a, 30b) above and below the honeycomb (28), and a covering (32) of wound resin impregnated reinforcement fibers; a pair of reinforcement members (18a, 18b) located on opposite sides of the formed core and adjacent the intersecting fabric panel with each reinforcement member having a center of honeycomb (38a, 38b), a load bearing resin impregnated reinforced layer above (34a, 34b) and below (36a, 36b) the honeycomb and a resin impregnated wound fiber reinforcement covering; and the units all being cured into a composite wing skin-spar joint.

11. A composite skin-spar joint as in claim 10 further comprising: the spaced apart panels (24a, 24b) of the woven fabric having the spacing increase as the panels extend outward, and each reinforcement member having means for varying load bearing properties in a spanwise direction.

12. A composite skin-spar joint as in claim 11 wherein the means for varying the load bearing properties in the reinforcement members comprise: the reinforcement in the load bearing layer (34a, 34b) having reinforcing fibers aligned in the spanwise direction, and the thickness of the load bearing layer with respect to the thickness of the honeycomb layer (38a, 38b) varies with the reinforced layers increasing in thickness and the honeycomb decreasing accordingly in thickness as the load bending moment increases.

13. A composite skin-spar joint as in claim 12 further comprising resin impregnated glass fibers for the honeycomb, graphite fiber for the reinforcements and an epoxy for the resin.

14. A method of making a composite skin-spar joint, as claimed in one of the claims 1—13, with the steps comprising: placing two matching shaped reinforced plastic chords (18a, 18b) and an intermediate core (16) side by side, bringing a resin impregnated interwoven fabric (12) against the cores with an upright section (24a, 24b) between and extending above the cores and an interwoven transverse section (20) on top of the cores, placing a fourth core (14) above the intermediate core (16) and contacting the transverse section (20) and the extensions (24a, 24b) of the woven fabric and moving the chords and the cores with contacting fabric through a curing section of a microwave generator for setting up the resin and forming a composite skin-spar joint.

15. A method of making a composite skin-spar joint as in claim 14 with further steps comprising: preparing the two outside core members (18a, 18b) by laying up epoxy resin impregnated graphite fibers (34a, 36a; 34b, 36b) with a gradual variance in thickness of the lay-up, securing honeycomb (38a, 38b) onto the lay-up, trimming the honeycomb, placing a matching lay-up of epoxy resin impregnated graphite fibers with a gradual variance in thickness of the lay-up onto the trimmed honeycomb, and wrapping epoxy impregnated graphite fibers (40a, 40b) around the joined member to form the outside cores (18a, 18b).

16. A method of making a composite skin-spar joint as in claim 15 with further steps comprising: preparing the intermediate core (16) by placing a layer of resin impregnated graphite fibers above (30a) and below (30b) honeycomb (28) utilizing a crisscrossing structure, and wrapping epoxy impregnated graphite fibers (32) around the layers and honeycomb forming a core.

**Patentansprüche**

1. Verbund-Haut-Holm-Verbindung (10) umfassend einen langgestreckten, im wesentlichen T-förmigen Querschnitt, der einen Körper und Arme hat, eine harzimprägnierte, gewebte Bespannungsstoffplatte (20), die sich gerade über die Unterseite der Arme erstreckt, einen verstärkenden Kern (14) in dem Körperbereich und einen verstärkenden Kern, der sich in den Armen erstreckt, gekennzeichnet durch ein Paar von harzimprägnierten, gewebten Bespannungsstoffplatten (24a, 24b) entlang der Außenseite des Körpers, die sich durch die Arme erstrecken, und daß der verstärkende Kern, der sich in den Armen erstreckt, aus zwei individuellen Strängen (18a, 18b) und einem zwischenliegenden Kern (16) besteht, die durch das erwähnte Paar von Bespannungsstoffplatte (24a, 24b) voneinander getrennt sind.

2. Verbund-Haut-Holm-Verbindung nach Anspruch 1, dadurch gekennzeichnet, daß das Paar von harzimprägnierten Bespannungsstoffplatten (24a, 24b) einen Abstand hat, der so variiert, daß er sich weiter auseinander bewegt, wenn sich die Platten nach auswärts erstrecken.

3. Verbund-Haut-Holm-Verbindung nach Anspruch 2, dadurch gekennzeichnet, daß das Paar von verstärkenden Strängen (18a, 18b) in den Armen variierende Lasttrageeigenschaften in einer spannweitenweisen Richtung hat.

4. Verbund-Haut-Holm-Verbindung nach Anspruch 2, dadurch gekennzeichnet, daß das Paar von verstärkenden Strängen (18a, 18b) in den Armen je folgendes umfaßt: eine Oberseiten- (24a, 24b) und Boden- (36a, 36b) -flächenplatte von verstärktem Kunststoff, eine nichtmetallische zellenartige Struktur (38a, 38b) zwischen den Flächenplatten und eine harzimprägnierte Faserumwicklung (40a, 40b) zum Aufbau von jedem der beiden Stränge.

5. Verbund-Haut-Holm-Verbindung nach Anspruch 4, dadurch gekennzeichnet, daß sie weiter folgendes aus faßt: die Flächenplatten- (34a; 34b, 36a; 36b) -verstärkung von Fasern, die in einer spannweitenweisen Richtung ausgerichtet sind, und die Dicke der Flächenplatten und der zellenartigen Struktur (38a; 38b) variierend innerhalb des Strangs (18a; 18b) wobei die Flächenplatten in der Dicke zunehmen und die zellenartige Struktur (38a; 38b) eine entsprechende Abnahme in der Dicke entlang der Spannweite hat, wenn die Last zunimmt.

6. Verbund-Haut-Holm-Verbindung nach Anspruch 5, dadurch gekennzeichnet, daß die Flächenverstärkung und die Faser für die Umwicklung aus Graphit sind und daß die zellenartige Struktur (38a, 38b) aus Glasgefüge in einem Epoxyharz ist.

7. Verbund-Haut-Holm-Verbindung nach Anspruch 3, dadurch gekennzeichnet, daß sie weiter einen zwischenliegenden zweiten Kern (16) umfaßt, der, um Torsionsbelastungen zu widerstehen, eine Kreuzverstärkung hat.

8. Verbund-Haut-Holm-Verbindung nach Anspruch 3, dadurch gekennzeichnet, daß der zwischenliegende Kern folgendes umfaßt: eine Ober- (30a) und Boden- (30b) -flächenplatte aus verstärktem Kunststoff, eine nichtmetallische Kreuz-Zellenstruktur (28) zwischen den Flächenplatten und eine harzimprägnierte Faserumwicklung (32) zum Aufbau des zwischenliegenden Kerns.

9. Verbund-Haut-Holm-Verbindung nach Anspruch 8, dadurch gekennzeichnet, daß die Flächenplatten- (30a, 30b) -verstärkung und die Umwicklung (32) aus Graphitfasern sind und daß die zellenartige Struktur (28) Glasfasern in einem Epoxyharz sind.

10. Verbundflügel-Haut-Holm-Verbindung (10) umfassend:
einen harzimprägnierten, gewebten Spannungsstoff, der zwei voneinander im Abstand befindliche Platten (24a, 24b) hat, die sich über die Länge der Flügelspannweite erstrekken, und eine kreuzende Platte (20), die sich zwischen den im Abstand voneinander befindlichen Platten (24a, 24b) erstreckt, damit verwebt wird und sich seitlich über jede derselben hinaus erstreckt; einen Zellenkern (14), der sich zwischen den beiden Platten und benachbart der Seite der kreuzenden Platte erstreckt, und zwar einwärts der Verbindung gegenüberstehend;

einen geformten Kern (16) zwischen den beiden Platten (24a, 24b) und benachbart der entgegengesetzten Seite der kreuzenden Platte (20), wobei der geformte Kern (16) ein Zentrum aus zellenartiger Struktur (28) hat, das in einer kreuzenden Richtung ausgerichtet ist, eine verstärkende Harzschicht (30a, 30b) oberhalb und unterhalb der zellenartigen Struktur (28) und eine Abdeckung (32) aus gewickelten, harzimprägnierten Verstärkungsfasern; ein Paar von Verstärkungsteilen (18a, 18b), die sich auf entgegengesetzten Seiten des geformten Kerns benachbart der kreuzenden Bespannungsstoffplatte befinden, wobei jedes Verstärkungsteil ein Zentrum aus zellenartiger Struktur (38a, 38b) hat, eine lasttragende, harzimprägnierte, verstärkte Schicht oberhalb (34a, 34b) und unterhalb (36a, 36b) der zellenartigen Struktur und eine harzimprägnierte, gewickelte Faserverstärkungsabdeckung; und die Einheiten sind alle zu einer Verbundflügel-Haut-Holm-Verbindung gehärtet.

11. Verbund-Haut-Holm-Verbindung nach Anspruch 10, dadurch gekennzeichnet, daß sie weiter folgendes umfaßt: die im Abstand voneinander befindlichen Platten (24a, 24b) des gewebten Bespannungsstoffs haben einen Abstand, der zunimmt, wenn sich die Platten nach auswärts erstrecken, und jedes Verstärkungsteil hat Mittel zum Variieren der lasttragenden Eigenschaften in einer spannweitenweisen Richtung.

12. Verbund-Haut-Holm-Verbindung nach Anspruch 11, dadurch gekennzeichnet, daß die Mittel zum Variieren der lasttragenden Eigenschaften in den Verstärkungsteilen folgendes umfassen: die Verstärkung in der lasttragenden Schicht (34a, 34b) hat verstärkende Fasern, die in der spannweitenweisen Richtung ausgerichtet sind, und die Dicke der lasttragenden Schicht variiert mit Bezug auf die Dicke der Schicht (38a, 38b) aus zellenartiger Struktur, wobei die verstärkten Schichten in der Dicke zunehmen und die zellenartige Struktur entsprechend in der Dicke abnimmt, wenn das Lastbiegemoment zunimmt.

13. Verbund-Haut-Holm-Verbindung nach Anspruch 12, dadurch gekennzeichnet, daß sie weiter harzimprägnierte Glasfasern für die zellenartige Struktur, Graphitfasern für die Verstärkungen und ein Epoxy für das Harz umfaßt.

14. Verfahren zum Herstellen einer Verbund-Haut-Holm-Verbindung nach einem der Ansprüche 1 bis 13, wobei die Schritte folgendes umfassen: Anordnen von zwei zusammenpassenden, geformten verstärkten Kunststoffsträngen (18a, 18b) und eines zwischenliegenden Kerns (16) nebeneinander, Bringen eines harzimprägnierten verwebten Bespannungsstoffs (12) gegen die Kerne, wobei sich ein aufrechter Abschnitt (24a, 24b) zwischen den Kernen befindet und sich über die Kerne und einen verwebten Querabschnitt (20) auf der Oberseite der Kerne erstreckt, Anordnen eines vierten Kerns (14) über dem zwischenliegenden Kern (16) und Kontaktieren des Querabschnitts (20) und der Verlängerungen (24a, 24b) des gewebten Bespannungsstoffs und Bewegen der Stränge und der Kerne mit dem kontaktierenden Bespannungsstoff durch einen Härtungsabschnitt eines Mikrowellengenerators zum Aushärten des Harzes und Ausbilden einer Verbund-Haut-Holm-Verbindung.

15. Verfahren zum Herstellen einer Verbund-Haut-Holm-Verbindung nach Anspruch 14, dadurch gekennzeichnet, daß es weiter folgende Schritte umfaßt: Herstellen der beiden außenseitigen Kernteile (18a, 18b) durch Anordnen von epoxyharzimprägnierten Graphitfasern (34a, 36a; 34b, 36b) mit einer allmählichen Varianz in der Dicke des harzgetränkten Verstärkungsmaterials, Befestigen der zellenartigen Struktur (38a, 38b) auf dem harzgetränkten Verstärkungsmaterial, Trimmen der zellenartigen Struktur, Anordnen einer zusammenpassenden Anordnung von epoxyharzimprägnierten Graphitfasern mit einer allmählichen Varianz in der Dicke des harzgetränkten Verstärkungsmaterials auf dem getrimmten zellenartigen Material, und Wickeln von epoxyharzimprägnierten Graphitfasern (40a, 40b) um das verbundene Teil zum Formen der außenseitigen Kerne (18a, 18b).

16. Verfahren zum Herstellen einer Verbund-Haut-Holm-Verbindung nach Anspruch 15, dadurch gekennzeichnet, daß es weiter folgende Schritte umfaßt: Herstellen des zwischenliegenden Kerns (16) durch Anordnen einer Schicht von harzimprägnierten Graphitfasern über (30a) und unter (30b) dem zellenartigen Material (28) unter Verwendung einer Kreuzstruktur, und Wickeln von epoxyimprägnierten Graphitfasern (32) um die Schichten und die zellenartige Struktur, die einen Kern bilden.

## Revendications

1. Joint composite (10) entre un revêtement et une poutrelle, ayant une section allongée pratiquement en T, comportant un corps et des bras, un panneau (20) d'étoffe tissée imprégnée d'une résine, destiné à être disposé directement en direction transversale à la face inférieure des bras, une âme de renforcement (14) formée dans la zone du corps, et une âme de renforcement disposée dans les bras, caractérisé par une paire de panneaux (24a, 24b) d'étoffe tissée imprégnés de résine, placés le long de la face externe du corps et disposés sur les bras, et en ce que l'âme de renforcement pénétrant dans les bras est constituée de deux cordes individuelles (18a, 18b) et d'une âme intermédiaire (16) séparées mutuellement par la paire de panneaux d'étoffe (24a, 24b).

2. Joint composite entre un revêtement et une poutrelle selon la revendication 1, caractérisé en ce que la paire de panneaux d'étoffe imprégnés de résine (24a, 24b) a un espacement qui varie de manière que les panneaux s'écartent lorsqu'ils sont dirigés vers l'extérieur.

3. Joint composite entre un revêtement et une poutrelle selon la revendication 2, caractérisé en ce que la paire de cordes de renforcement (18a, 18b) placée dans les bras a des propriétés variables d'encaissement de charge dans la direction de l'envergure.

4. Joint composite entre un revêtement et une poutrelle selon la revendication 2, dans lequel les deux cordes de renforcement (18a, 18b) placées dans les bras comportent chacune une feuille de parement supérieure (34a, 34b) et inférieure (36a, 36b) formée de matière plastique armée, un élément non métallique en nid d'abeilles (38a, 38b) placé entre les feuilles de parement, et un enroulement (40a, 40b) de fibres imprégnées de résine, destinées à constituer chacune des cordes de la paire.

5. Joint composite entre un revêtement et une poutrelle selon la revendication 4, tel que les fibres de renforcement de la feuille de parement (34a; 34b, 36a; 36b) sont orientées dans la direction de l'envergure et l'épaisseur des feuilles de parement et des éléments en nid d'abeilles (38a; 38b) varient dans la corde (18a; 18b), l'épaisseur des feuilles de parement augmentant et l'élément en nid d'abeille (38a; 38b) ayant une épaisseur qui diminue de manière correspondante suivant l'envergure, lorsque la charge augmente.

6. Joint composite entre un revêtement et une poutrelle selon la revendication 5, dans lequel le renforcement du parement et les fibres d'enroulement sont formés de graphite et l'élément en nid d'abeilles (38a, 38b) est formé d'une étoffe de verre placée dans une résine époxyde.

7. Joint composite entre un revêtement et une poutrelle selon la revendication 3, comprenant en outre le fait que la seconde âme intermédiaire (16) a un renforcement entrecroisé destiné à résister aux forces de torsion.

8. Joint composite entre un revêtement et une poutrelle selon la revendication 3, dans lequel l'âme intermédiaire (16) comporte des feuilles de parement supérieure (30a) et inférieure (30b) de matière plastique armée, un élément en nid d'abeilles (28) entrecroisé et non métallique placé entre les feuilles de parement et un enroulement (32) de fibres imprégnées de résine, destiné à constituer l'âme intermédiaire.

9. Joint composite entre un revêtement et une poutrelle selon la revendication 8, dans lequel le renforcement de la feuille de parement (30a, 30b) et l'enroulement (32) sont formés de fibres de graphite et l'élément en nid d'abeilles (28) est formé de fibres de verre dans une résine époxyde.

10. Joint composite entre un revêtement d'aile et une poutrelle (10) comprenant une étoffe tissée imprégnée de résine ayant deux panneaux distants (24a, 24b) destinés à être disposés sur l'envergure de l'aile et un panneau sécant (20) disposé entre les panneaux distants (24a, 24b), tissée avec entrelacement avec ces panneaux et dépassant latéralement au-delà de chacun de ces panneaux, une âme (14) en nid d'abeilles destinée à être disposée entre les deux panneaux et près du côté du panneau sécant, en étant tournée vers

l'intérieur du joint, une âme formée (16) placée entre les deux panneaux (24a, 24b) et adjacente à la face opposée du panneau sécant (20), l'âme formée (16) ayant un élément central en nid d'abeilles (28) aligné en directions entrecroisées, une couche de résine armée (30a, 30b) placée au-dessus et au-dessous de l'élément en nid d'abeilles (28), et un recouvrement (32) de fibres enroulées de renforcement, imprégnées de résine, deux organes de renforcement (18a, 18b) placés de part et d'autre de l'âme formée et adjacents au panneau sécant d'étoffe, chaque organe de renforcement ayant un élément central en nid d'abeilles (38a, 38b), une couche renforcée imprégnée de résine et destinée à encaisser les forces au-dessus (34a, 34b) et au-dessous (36a, 36b) de l'élément en nid d'abeilles et un recouvrement de renforcement de fibres enroulées et imprégnées de résine, les éléments étant tous durcis sous forme d'un joint composite entre un revêtement d'aile et une poutrelle.

11. Joint composite entre un revêtement et une poutrelle selon la revendication 10, comprenant en outre le fait que l'espacement des panneaux distants (24a, 24b) de l'étoffe tissée augmente lorsque les panneaux s'écartent vers l'extérieur, et chaque organe de renforcement a un dispositif destiné à faire varier les propriétés d'encaissement de forces dans la direction de l'envergure.

12. Joint composite entre un revêtement et une poutrelle selon la revendication 11, dans lequel le dispositif destiné à faire varier les propriétés d'encaissement de forces dans les organes de renforcement est tel que le renforcement de la couche (34a, 34b) destinée à encaisser les forces a des fibres de renforcement alignées dans la direction de l'envergure, et l'épaisseur de la couche destinée à encaisser les forces, par rapport à l'épaisseur de la couche (38a, 38b) en nid d'abeilles, varie, les couches renforcées ayant une épaisseur qui augmente et l'élément en nid d'abeilles une épaisseur qui diminue de manière correspondante lorsque le moment de flexion sous charge augmente.

13. Joint composite entre un revêtement et une poutrelle selon la revendication 12, comprenant en outre des fibres de verre imprégnées d'une résine destinées à former l'élément en nid d'abeilles, des fibres de graphite destinées à former les renforcements et une résine époxyde destinée à constituer la résine.

14. Procédé de fabrication d'un joint composite entre un revêtement et une poutrelle selon l'une quelconque des revendications 1 à 13, comprenant les étapes de disposition de deux cordes (18a, 18b) de matière plastique renforcée, ayant des formes complémentaires, et d'une âme intermédiaire (16) côte à côte, la disposition d'une étoffe (12) tissée avec entrelacement et imprégnée de résine contre les âmes, avec un tronçon perpendiculaire (24a, 24b) placé entre les âmes et disposé au-dessus de celles-ci et un tronçon transversal entrelacé (20) placé à la partie supérieure des âmes, de disposition d'une quatrième âme (14) au-dessus de l'âme intermédiaire (16) et de mise en contact du tronçon transversal (20) et des prolongements (24a, 24b) de l'étoffe tissée, et de déplacement des cordes et des âmes au contact de l'étoffe dans un tronçon de durcissement d'un générateur d'hyperfréquences afin que la résine durcisse et qu'un joint composite entre un revêtement et une poutrelle soit formé.

15. Procédé de fabrication d'un joint composite entre un revêtement et une poutrelle selon la revendication 14, ayant des étapes supplémentaires qui comprennent la préparation des deux organes externes (18a, 18b) par disposition de fibres de graphite (34a, 36a; 34b, 36b) imprégnées d'une résine époxyde avec une variation progressive d'épaisseur lors du dépôt, la fixation d'un élément en nid d'abeilles (38a, 38b) sur la couche déposée, l'usinage à la dimension de l'élément en nid d'abeilles, la disposition par dépôt de formes complémentaires, de fibres de graphite imprégnées d'une résine époxyde avec une variation progressive d'épaisseur dans le dépôt, sur l'élément en nid d'abeilles mis à la dimension, et l'enroulement de fibres de graphite (40a, 40b) imprégnées de résine époxyde autour de l'organe raccordé afin que les âmes externes (18a, 18b) soient formées.

16. Procédé de fabrication d'un joint composite entre un revêtement et une poutrelle selon la revendication 15, ayant des étapes supplémentaires qui comprennent la préparation de l'âme intermédiaire (16) par disposition d'une couche de fibres de graphite imprégnées de résine au-dessus (30a) et au-dessous (30b) de l'élément en nid d'abeilles (28) avec une structure entrecroisée, et l'enroulement de fibres de graphite (32) imprégnées de résine autour des couches et de l'élément en nid d'abeilles formant une âme.

*Fig.1*

*Fig.2*

*Fig. 4*

*Fig. 3*

**Fig. 5**

⊄ BODY

SIDE OF BODY

FORWARD

WING BOX SEMISPAN PLAN VIEW

44

7

7

**Fig. 6**

LIMIT BENDING MOMENT

0.1 0.2 0.3 0.4 0.5 0.6 0.7 0.8 0.9 1.0

**Fig. 7**

38a

40 42

34a

36a

8

8

**Fig. 8**

34a

38a

36a